(19) Europäisches Patentamt / European Patent Office / Office européen des brevets

(11) **EP 4 344 592 B1**

(12) **EUROPEAN PATENT SPECIFICATION**

(45) Date of publication and mention
of the grant of the patent:
**09.07.2025 Bulletin 2025/28**

(21) Application number: **23200876.3**

(22) Date of filing: **29.09.2023**

(51) International Patent Classification (IPC):
**A47J 37/08** *(2006.01)*

(52) Cooperative Patent Classification (CPC):
**A47J 37/0842; A47J 37/085; A47J 37/0857**

(54) **TRANSITION STATE TOASTING CONVEYOR CONTROL**

ÜBERGANGSZUSTANDS-TOAST-FÖRDERANLAGENSTEUERUNG

COMMANDE DE TRANSPORTEUR GRILLE-PAIN À ÉTAT DE TRANSITION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.09.2022 US 202263377630 P
22.09.2023 US 202318472680**

(43) Date of publication of application:
**03.04.2024 Bulletin 2024/14**

(73) Proprietor: **Marmon Foodservice Technologies,
Inc.
Osseo, MN 55369 (US)**

(72) Inventors:
• **Shimelfarb, Ilya
Osseo, 55369 (US)**
• **Duvick, Forrest
Osseo, 55369 (US)**
• **Saiz, Rick
Osseo, 55369 (US)**

(74) Representative: **Slingsby Partners LLP
1 Kingsway
London WC2B 6AN (GB)**

(56) References cited:
US-A- 4 503 758          US-A- 5 128 521
US-A- 5 179 265          US-A1- 2011 277 643
US-A1- 2013 306 616

**Description**

CROSS-REFERENCE TO RELATED APPLICATIONS

The present application claims priority of US Provisional Patent Application No. 63/377,630, filed on September 29, 2022.

FIELD OF THE DISCLOSURE

The present disclosure is related to toasting. More specifically, the present disclosure relates to an apparatus and control of an apparatus configured for toasting during transitory periods of toaster temperature.

BACKGROUND

Many restaurants serve toasted bread or English muffins as regular menu items. Many other menu items include sandwiches that are comprised of toasted baked goods including toasted bread, buns, or English muffins.
Toasted food products have a distinctly different flavor than the same products prior to toasting. Toasting a food product also changes the bread product's color and texture. In addition to changing flavor, color, and texture, the toasting process often gives off a pleasing aroma.
Toasting food products, for example, sliced bread, English muffins, bagels, pizza crust, and other baked goods or prepared food products for example pizzas or sandwiches, is usually accomplished using radiant or conductive energy transfer into the baked good from one or more heat sources. The process of toasting, which is also referred to herein as browning, is the result of a chemical reaction known as the Maillard reaction. The Maillard reaction is the reaction between carbohydrates and proteins that occurs upon heating and which produces browning.
There are a large variety of toasters that exist and are used in the industry. A platen toaster uses a vertical or near-vertical heating platen and a slowly rotating conveyor which urges a food product against the platen while it simultaneously drags a food product downwardly and across the platen's hot surface. The toasting process is terminated by the conveyor moving the food product beyond contact with the platen. A conveyor toaster is conventionally oriented horizontally with (natural) gas-fired burners or equivalent electrical heat sources arranged above and/or below a conveyor upon which the food product to be toasted is moved through the toaster. The toasting process is terminated by the conveyor moving the food product beyond the heat sources. In an example of an oven toaster, the food product is held within the toaster in a fixed position relative to one or more heating sources which direct heat energy towards the food product. The toasting process is terminated by turning off the heat sources and/or removing the food product from the toaster.
Examples of technology which may be used in the toasting of bread products include US Patent No. 10,660,466, entitled "Toaster with Adjustable Conveyor"; US Patent No. 11,284,745, entitled "Infrared Toaster"; US Patent Application Publication No. 2020/288912, entitled "Infrared Toaster"; US Patent Application Publication No. 2021/0059472, entitled "Latent Heat Toaster Control"; US Patent Application Publication No. 2021/0085125, entitled "Vertical Heat Transfer Device"; US Patent Application Publication No. 2021/0127898, entitled "Cooking Appliance with Cooked Food Holding Apparatus," US Patent Application Publication No. 2021/0298526, entitled "Toaster with Input Control", and US Patent Application No. 17/749,649, entitled "System and Method of Broiler Heating Element Control" and US2013/306616.
US Patent Nos. 5,821,503; 6,198,077; 6,624,396; and 7,541,559 disclose examples of conveyor speed control based upon measured temperatures within an oven. US Patent Nos. 10,004,358 and 10,758,085 disclose examples of conveyor speed control based upon estimated temperature and/or an estimated loading of the oven. The present inventors have discovered a manner of conveyor speed control that is based upon timing data and which is scalable between changes in toasting recipes.

BRIEF DISCLOSURE

An example of a radiant toaster for toasting a bread product in a toasting process includes a conveyor and a heat source arranged relative to the conveyor. A controller is configured to receive a transition state model and a toasting recipe that comprises a standard operation toasting time. Upon receipt of an instruction to change a heat output of the heat source to a new output, the controller operates the heat source to the new output and measures an elapsed time since the change to the new output. The controller calculates a current transition state toast time by applying the standard operation toasting time and the elapsed time to the transition state model. The controller is configured to operate the conveyor to a conveyor speed associated to the current transition state toast time.
In further examples of the toaster, the heat source is a first heat source and the toaster further includes a second heat source. The first heat source is arranged above the conveyor and the second heat source is arranged below a top surface of the conveyor. The or each heat source can be a gas or an electric IR emitter heat source. The first and second heat sources may be the same or may be different. The transition state model may be a first transition state model and the toaster further includes a second transition state model.

The first transition state model is an increased output transition state model. The second transition state model is a decreased output transition state model. The controller further selects between the first transition state model and the second transition state model based upon the new output of the heat source. The transition state model may be empirically derived. The transition state model may be a polynomial.

In still further examples of the toaster, the toaster includes a touch-sensitive graphical display communicatively connected to the controller. The touch-sensitive graphical display is configured to be operated by the controller to present a graphical user interface (GUI) and configured to receive user inputs. The controller is configured to monitor an elapsed time since a user input is received at the touch-sensitive graphical display. The controller is configured to reduce an output of the heat source if the elapsed time exceeds a predetermined threshold. The controller is configured to return the heat source to a previous output upon subsequent receipt of a user input at the touch-sensitive graphical display. The conveyor may be a first conveyor and the toaster may include a second conveyor and a third heat source arranged above the second conveyor and a fourth heat source arranged below a top surface of the second conveyor. The first conveyor and the second conveyor are adjacent and co-planar. The controller may be configured to operate the first conveyor, first heat source, and the second heat source according to a first toasting recipe. The controller is configured to operate the second conveyor, third heat source, and the fourth heat source according to a second toasting recipe.

In still further examples, the transition state model is a polynomial having the form of: $T_t = A(T_S)x^3 + B(T_S)x^2 + C(T_S)x + D(T_S)$, wherein $T_t$ is a current toast time for a new bread product; x is an elapsed time in the transition state; and $T_S$ is a standard toast time for the bread and toast level. The heat source is a first heat source arranged above the conveyor and a second heat source is arranged below a top surface of the conveyor. Values of the coefficients of the polynomial are dependent upon an energy output distribution between the first heat source and the second heat source.

An example of a method of toaster conveyor speed control includes receiving a transition state model at a controller of a toaster. At least one heat source is operated to a first heat output. A standard toast time for a bread product to be toasted is received. A conveyor is operated at a conveyor speed based upon the standard toast time. The at least one heat source is operated to change to a second heat output. An elapsed time is measured since the change to the second heat output. A current toast time is calculated by applying the standard toast time and the elapsed time to the transition state model. A conveyor is operated at a current conveyor speed based upon the calculated current toast time.

In further examples of the method an elapsed time since a user input is received at a graphical display of the toaster is monitored. When the elapsed time exceeds a predetermined threshold, the at least one heat source is operated to change to the second heat output. The second heat output is a reduction is total output from the first heat output. The transition state model is a first transition state model and is an increased output transition state model. A second transition state model is a decreased output transition state model. The method may further include selecting between the first transition state model and the second transition state model based upon a value of the second heat output. The current toast time is calculated independently from a temperature internal to the toaster. The transition state model may be a third-order polynomial. A calibration routine may be used to empirically derive coefficients of the third-order polynomial of the transition state model.

BRIEF DESCRIPTION OF THE DRAWINGS

Figure 1 is a system diagram of an exemplary embodiment of a toaster.
Figure 2 is a schematic cross-sectional view of the toaster taken along line 2-2 of Fig. 1.
Figure 3 is a graph that depicts examples of power save and standard operation of a toaster.
Figure 4 is a state diagram of an example of the operational states of a toaster.
Figure 5 is a graph of calculated toasting times that depicts various scaled versions of a transition state model.
Figure 6 is a graph of calculated toasting times that depicts an example of a change between transition state models.
Figure 7 is a flow chart that depicts an example of a method of toasting control.

DETAILED DISCLOSURE

Restaurant menus often include a variety of bread products, either as individual items (e.g. toast, English muffin, bagel) or as a component of a sandwich (e.g. sliced baked goods including bread, bagels, croissant, rolls, or buns). Each of these bread products have different moisture, densities, and other qualities which affect the length of time and heat intensity required to toast the bread product. Restaurant and/or customer preferences may further define a level of toasting, for example, light, medium, or dark toasting. It will be recognized that increased heat intensity and/or length of time will produce a higher level of toasting on a given bread product. A toaster or a portion of a toaster may be required to transition between various operational states to accommodate the toasting of various bread products throughout the day. Additionally, restaurants may experience greater demand for toasted bread products during particular times of the day, while requiring the toaster to be operational even during times of low demand. Therefore, an efficiently operating toaster may have more than one operational state in an effort to reduce mechanical component wear and energy consumption of the machine.

The presently disclosed radiant toaster and method of toaster operation seek to improve toaster operation and accuracy of bread product toasting performance while the toaster transitions between operational states. In examples of the radiant toaster and method of toaster operation disclosed herein, the toasting time of a bread product is adjusted for times in which the toaster is in a transition between operational states.

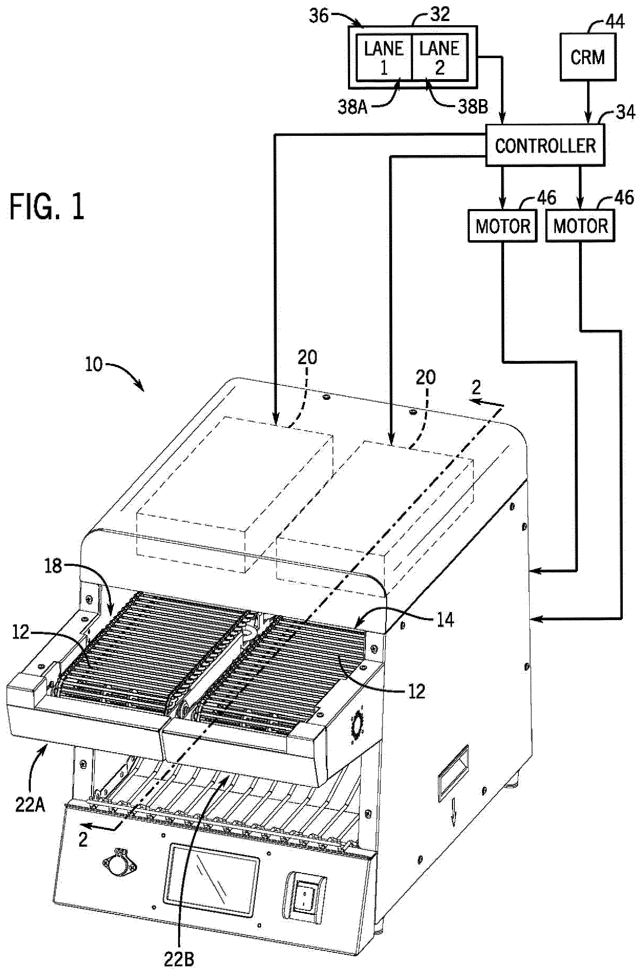

Figure 1 depicts an example of a toaster 10. The toaster 10 exemplarily includes two conveyors 12. The conveyors 12 may exemplarily be metal or silicone belts. Further, metal belts may exemplarily be constructed of wire links, as shown in Fig. 1, metal slats, or belts may be constructed in other manners as may be recognized. The conveyors 12 project outward through an opening 14 in a housing 16 of the toaster 10. They conveyors 12 thus are partially within the housing 16 and partially exterior of the housing 16. The portions of the conveyors 12 exterior of the housing 16 form a loading zone 18 upon which a baked good can be toasted. As shown and described herein each conveyor 12 defines a lane 22 along which baked goods are moved through the toaster 10, other examples of the toaster 10 may use a single conveyor 12 defining one or more lanes, or more than two conveyors 12.

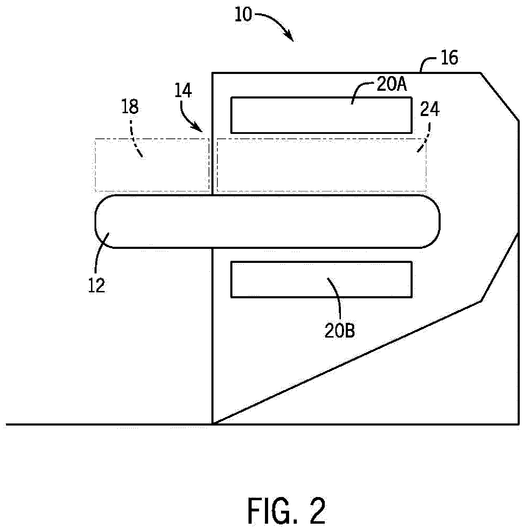

Fig. 2 is a schematic cross-sectional view taken along line 2-2 of Fig. 1, depicting the interior of the toaster 10. The conveyor 12 moves a bread product through a toasting zone 24 past at least one heat source 20 positioned relative to the conveyor 12. The example shown in Fig. 2 includes two heat sources, positioned above and below the conveyor 12. The at least one heat source may be any of a variety of radiant heat sources including resistive wire, CALROD, gas combustion, LED, or others as will be recognized by one of ordinary skill in the art. In an example, the toaster 10 may have a heat source that is exemplarily two IR heat sources 20. The heat sources 20 are arranged to direct IR energization at a bread product. While Fig. 2 depicts a heat source 20 positioned below the conveyor 12, in other examples, the heat source 20 may be positioned internal to the conveyor 12. In the embodiment depicted in Fig. 1, and as will be explained in further detail herein, the heat sources 20 may be configured and/or operated to either simultaneously toast both sides of the bread product or may be configured and/or operated such that one heat source 20 provides a toasting heat, while the other heat source directs supplemental heat energy towards the bread product and/or the toasting zone 24 to improve the efficiency of the toasting process.

The toaster 10 includes a graphical display 32 that is operated by the controller 34 to present a graphical user interface (GUI) 36. In an example, the graphical display 32 is a touch-sensitive graphical display and therefore is operable to receive user inputs in response to prompts presented by the GUI 36. The GUI exemplarily includes input options for operation of Lane 1 38A and Lane 2 38B. The GUI 36 operates to visually present a plurality of control options for each lane, including but not limited to heat source temperature/output/energy and conveyor speed. In a further example, these heat source and conveyor settings may be pre-stored or pre-programmed as a plurality of "recipes" for the toasting of various bread products and/or other foods. The recipe defines one or more toaster settings designated to achieve a desired, expected, or intended toasting condition on a particular type of bread product. The recipes exemplarily include a heat output of a one or more heat sources (e.g. an upper heat source and a lower heat source), and a conveyor speed. The values of heat output and conveyor speed for a particular recipe may be determined empirically or by preference. The toaster 10 may be programmed with recipes specific types of bread products, for example, but not limited to white bread slices, sourdough bread slices, English muffins, bagels, croissants, hamburger buns, breakfast, or use setting (e.g. breakfast, lunch, or supper menus).

The toaster 10 exemplarily includes a controller 34, shown schematically in Fig. 1. It will be recognized that the controller 34 is exemplarily any of a variety of known controller circuits, integrated circuits, microcontrollers, microprocessors, and associated circuitry. The controller 34 may exemplarily include a central processing unit (CPU) and integrated memory in the form of a computer-readable medium (CRM) 44, although in embodiments the computer-readable medium 44 comprising the memory may be a separate component or communicatively connected to the controller 34 within the toaster. The controller 34 exemplarily includes a processor that accesses software or firmware in the form of computer-readable code stored on the non-transient computer-readable medium as either integrated memory or external memory. The processor executes the computer-readable code as an instruction set to carry out the functions as described herein, including the receipt of input, calculations, and outputs as will be described. The CRM 44 exemplarily further stores the algorithms and models as referred to herein in relation to, for example, energy decay, energy loss, or energy accumulation. In still further examples, it will be recognized that variables, constants, or correction factors may further be stored in the CRM for use in the methods as described herein. As described herein, the controller 34 accesses and applies at least two models: a decreased output transitory model and an increased output transitory model. Decreased output transitory models are exemplarily used when the toaster is entering into a power save operation or is changing to a recipe with a lower total heat output. Increased output transitory models are exemplarily used when the toaster is recovering from a power save operation or is changing to a recipe with a greater total heat output. One example of the decreased output transitory model is a power save transition model and one example of the increased output transitory model is a recovery transition model. The increased output transitory model and the decreased output transitory model may be defined as equations or as look-up tables with associated values based upon the input variables. Some models or algorithms stored in the CRM may be empirically determined through a calibration process and testing of the toaster unit before operational use. Other models or algorithms may be empirically refined through calibration or testing of the toaster unit.

The toasting effect is dependent upon the physical qualities of the bread, the heat energy from the heat source(s) 20, and the time that the bread product is exposed to the heat energy. The time that the bread product is exposed to the heat energy is determined by the speed of the conveyor 12. A speed of the conveyor 12 is directly related to a time that the bread product is toasted. The controller 34 is exemplarily connected to conveyor motors 46, which are operably connected to the conveyors 12. The conveyor motors 46 exemplarily receive control signals from the controller 34 to input the speed at which the motor 46 advances a respective conveyor 12. The speed at which the motor 46 advances a conveyor 12 dictates the time that the bread product is within the toasting zone 24 and exposed to the radiant energy from the heat sources 20.

In an example of a toaster, the controller 34 is configured to operate the toaster at a standard operational output of the heat source(s) 20. This standard operational output may be selected to provide a toasting environment suitable to provide toasting outcomes across a variety of bread products within a user operational time expectation. In one example, the toaster 10 includes a top heat source 20A, which is a resistive wire heat source, configured to output a maximum of 3000 Watts and includes a bottom heat source 20B, which is a resistive wire heat source, configured to output a maximum of 2000Watts. A non-limiting example of a standard operation of these heat sources 20 by the controller 34 is to drive the top heat source 20A at 100% of maximum output and drive the bottom heat source 20B at 70% maximum output. This results in effective outputs of 3000 Watts from the top heat source 20A and 1400 Watts from the bottom heat source 20B. It will be recognized that this is one example of the configuration and standard operation of a toaster 10 and that other examples will be recognized from the present disclosure while remaining within the scope of such disclosure. In additional examples, the heat sources may be different types of heat sources as noted above and/or may have different maximum outputs than the example given. In still further examples, the top heat source 20A and the bottom heat source 20B may have the same maximum output or may be operated to the same effective output. Similarly, the bottom heat source 20B may have a greater maximum output than the top heat source 20A or be operated to a greater effective output. The standard operational output may be used across a plurality of recipes which, as noted above, comprise heat source output and conveyor speed. Still other recipes may define other values for the output of the heat source(s).

In an example operation, upon initial start up of the toaster, the top heat source 20A and the bottom heat source 20B are operated at 100% of maximum output to warm the toaster up from ambient. After this initial process, the controller 34 operates the heat sources in the standard operation, exemplarily noted above as 100% output at the top heat source 20A and 70% output at the bottom heat source 20B. The controller 34 may operate the heat source(s) according to a received recipe selection. To promote operational efficiency, the controller 34 may be configured to selectively enter into a power save mode, in which the realized output of the one or more heat sources 20 are lowered to reduce power (or fuel) consumption of the toaster during times of low or no use. It will be recognized that in examples, this may include, coincide with, or operate in addition to other power or wear-saving features, for example as described in US Patent Application Publication No. 2021/0298526, entitled "Toaster with Input Control" with respect to the conveyor 12. In an example of the power save mode, the bottom heat source 20B may continue to be operated at 70% output, while the output of the top heat source 20 is reduced to 60% output. This thus reduces the combined output power of the heat sources in this example from 4400 Watts to 3200 Watts, or a reduction between 25-30%, although reductions between 20-40% are also contemplated as well as greater or smaller reductions.

As disclosed in further detail in the above-referenced patent application, the power save mode may be entered into automatically, for example, after completing an instruction for a cooking cycle, based upon a clock schedule, or after an elapsed time since the toaster has been used to toast a product. In an example, which may be based in part upon the disclosure of US Patent Application Publication No. 2021/0298526, one or more sensors may be arranged at an opening 14 of the toaster 10. The controller 34 is configured to operate the toaster 10 in response to the detection of product entering the toaster at the opening 14. In an example, the controller is configured to enter the power save mode upon the passing of a predetermined elapsed time since product is sensed entering the toaster 10. In still further examples, the power save mode may be entered upon user entry of an input command, for example through the GUI 36 presented on the touch-sensitive graphical display 32.

While the toaster may enter a power save mode in any of the manners as described above, the controller 34 may further be configured to withdraw the toaster from the power save mode, returning it, for example, to the standard operation. The controller 34 may similarly be configured to make this transition out of the power saving mode automatically, for example, upon detection of a baked product entering the toaster or upon a clock schedule. In another example, the controller 34 transitions the operation of the toaster out of the power save mode upon an input command, for example through the GUI 36 presented on the touch-sensitive graphical display 32.

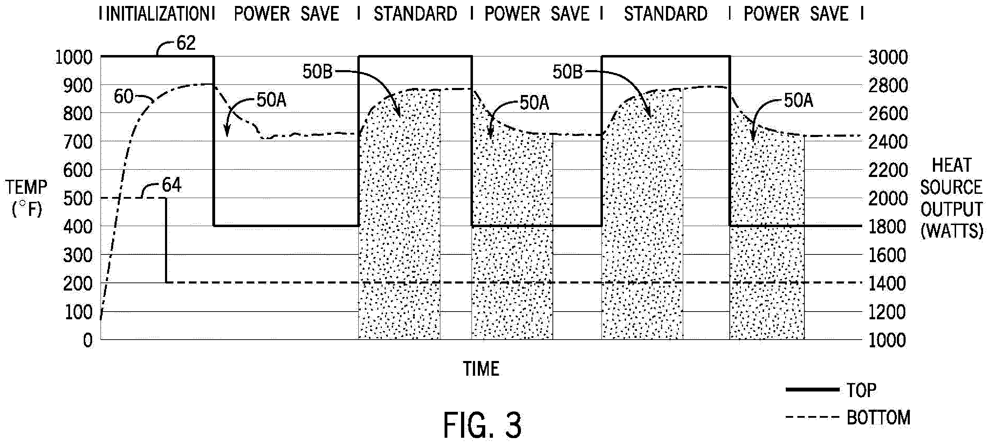

Figure 3 presents an example graph of toaster operation between a power save mode and the standard operation mode. The graph presents exemplary top heat source output 62 and bottom heat source output 64. These exemplarily change in a stepwise manner as the toaster changes from initialization to standard and power save operation modes. A nominal temperature 60 within the toasting zone 24 of the toaster 10 exhibits rise, fall, and steady-state conditions in response to changes in the heat source outputs. As shown in the graph of Fig. 3, the power save and the standard mode are exemplarily characterized by a change in the output of the top heat source, although other examples are contemplated based upon the disclosure above. Transition periods 50A show a falling toaster temperature in response to a lower heat source output and transition periods 50B show a rising toaster temperature in response to a higher heat source output.

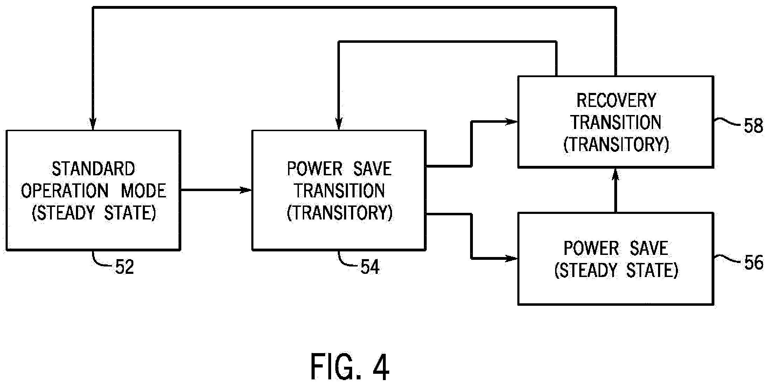

Figure 4 is a state diagram of an example of the operational states of a toaster. After initialization, as shown in Fig. 3, the toaster exemplarily enters the standard operation mode at 52. The standard operation mode is according to the current recipe that the toaster has been instructed to operate to. After warming up through initialization, or otherwise given enough time, the standard operation mode has an exemplary steady state of temperature inside the toaster and a conveyor speed that achieves the instructed toasting effect at that steady state temperature. Upon an instruction to decrease the thermal output of the toaster, the toaster enters a decreased output transitory state at 54, exemplarily a power save transition state, when the toaster is instructed to enter a power save mode with reduced heat source output. In the power save transition state, the conveyor is operated to slow, while maintaining the instructed toasting effect. If the toaster operates in the power save transition state at 54 for a sufficient length of time, the toaster will reach a power save steady state at 56. At the power save steady state a steady state (reduced) temperature is inside the toaster and the conveyor is operated at a speed to achieve the instructed toasting effect. When the toaster receives an input to exit the power save mode, to recover to the standard operation, or otherwise to increase the output of the heat sources of the toaster, the toaster enters an increased output transitory state at 58, exemplarily a recovery transition state. In the recovery transition state, the conveyor is operated to speed up, while maintaining the instructed toasting effect. If the toaster operates in the recovery transition state at 58 for a sufficient length of time, the toaster will reach the Standard Operation steady state at 52.

During a transition state between any two modes of operation (e.g. standard mode, power save mode), or a transition state between recipes with differing heat source outputs (described later herein), the controller applies an increased output transitory model or a decreased output transitory model to adjust a conveyor speed to continue to achieve the requested toasting level of the specified baked product. The inventors have discovered that by empirically modeling the toasting response, the conveyor speed adjustment may be performed using two equations (increased output or decreased output) with the inputs of elapsed time in the transition state and the toasting time in the standard operation. One equation is used to represent a "decrease" or "power save" operation of the heat source(s) while the other equation is used to represent an "increase" or "recovery" operation of the heat source(s). The equations may exemplarily be second-order or third-order polynomials. Both equations (e.g. as third order polynomials) exemplarily take the form of:

$$T_t = A(T_S)x^3 + B(T_S)x^2 + C(T_S)x + D(T_S)$$

Where: $T_t$ = Current toast time for a new bread product;
x = elapsed time in the transition state;
$T_S$ = Standard Toast time

It will be recognized that the coefficients (A, B, C, D) of the polynomial given above are empirically modeled to the design of the toaster. As will be detailed herein, the coefficients are dependent upon the configuration of the toaster. The top heat source of the toaster has an outsized effect on the toasting outcome achieved by the toaster during transition states. A greater percentage of the total heat source output attributed to the top heater is associated with a steeper recovery or power save transition, exemplarily with a greater coefficient magnitude in the transition state models. Further, it is recognized that for the transition state models, the "power save" equation will have different coefficients from the "recovery" equation. In a first example, the top heat source may have a heat output of 3000 W and the lower heat source may have a heat output of 2000W:

$$Power\ Save\ T_t = .00008(T_S)x^3 - .00577(T_S)x^2 + .15(T_S)x + 1(T_S)$$

$$Recovery\ T_t = -.00008(T_S)x^3 + .00577(T_S)x^2 - .15(T_S)x + 2.6(T_S)$$

It will be recognized that the Recovery equation has a third order exponential decay, reflecting that the conveyor speeds up as the toaster heat output increases, reducing the toasting time, to maintain the same toasting effect. The Power Save equation has a third order exponential increase, reflecting that the conveyor slows down as the toaster heat output decreases, increasing the toasting time, to maintain the same toasting effect. However, it will be recognized that other coefficients based upon specific construction, function, or operation of the toaster may be used. Such coefficients, may, for example, be empirically derived from another construction of toaster or under alternative operating conditions. The values of coefficients in the equations above may exemplarily have a range of approximately +/- an order of magnitude from the values above. In another example, the coefficient values may range between double and half of the values above. The values of the coefficients may depend in part on the change in power output between the two respective steady states. In examples, various changes in power output may be empirically tested and modeled resulting in specific coefficients or equations for specific power output changes.

Still further examples of coefficients are provided below with further reference to example heat source configurations. As shown in the table below, each of the toaster configurations exemplarily have a total output from the heat sources of 5000 W, but with different distributions of heat output between the top heat source and the bottom heat source. These distributions exemplarily range from 50% distribution (e.g. 2500 W at the top and 2500W at the bottom) to a 100% distribution (e.g. 5000W at the top and 0 W at the bottom). The magnitude of the coefficients (A, B, C) increase as the percentage of the total heat output supplied by the top heater increases. This reflects a steeper transition curve (in either recovery or power saving) as more of the heat in the system is supplied by the top heat source. Conversely, the constant (D) decreases as the percentage of the total heat output supplied by the top heater increases. It will be recognized that the heat source output configurations are merely exemplary, and that other combinations are contemplated within the scope of the present disclosure. In further examples, the percentage of the toaster total heat output attributed to the top heat source is reflective of the relationship between the coefficients for the equations of the transition state models.

| Heat Source Configuration (W) | | | | Recovery Coefficients | | | |
|---|---|---|---|---|---|---|---|
| Top | Bottom | Total | Top % | A(X3) | B(X2) | C(X) | D |
| 2500 | 2500 | 5000 | 50% | -0.00012 | 0.0005 | -0.03141 | 2.39 |
| 3000 | 2000 | 5000 | 60% | -0.00014 | 0.0045 | -0.11 | 2.12 |
| 3600 | 1400 | 5000 | 72% | -0.00016 | 0.009765 | -0.18859 | 1.85 |
| 5000 | 0 | 5000 | 100% | -0.0002 | 0.020295 | -0.34577 | 1.75 |
| Heat Source Configuration (W) | | | | Power Save Coefficients | | | |
| Top | Bottom | Total | Top % | A(X3) | B(X2) | C(X) | D |
| 2500 | 2500 | 5000 | 50% | 0.00004 | -0.00286 | 0.103352 | 1.05 |
| 3000 | 2000 | 5000 | 60% | 0.00008 | -0.00577 | 0.154496 | 1 |
| 3600 | 1400 | 5000 | 72% | 0.00012 | -0.00868 | 0.20564 | 0.95 |
| 5000 | 0 | 5000 | 100% | 0.0002 | -0.0145 | 0.307928 | 0.85 |

With reference to the tables above, the coefficients exhibit the exemplary ranges presented in the table below.

| Coefficient | Absolute Value Range | Recovery Range | Power Save Range |
|---|---|---|---|
| A | 0.00004 - 0.0002 | -0.00012 - -0.0002 | 0.00004 - 0.0002 |
| B | 0.0005 - 0.020295 | 0.0005 - 0.020295 | -0.00286 - -0.0145 |
| C | 0.03141 - 0.34577 | -0.03141 - -0.34577 | 0.103352 - 0.307928 |
| D | 0.85 - 2.39 | 1.75 - 2.39 | 0.85 - 1.05 |

Looking to the general equation above and the coefficient examples provided above, it stands out that once the coefficients are derived, the current toast time used by the controller to correspondingly operate the conveyor is based entirely on the time that it takes to achieve the requested toast level on the requested bread product, and an elapsed time into the transition state. That is, the same equation can be used across bread products or changes in toast level. For example, an English muffin when toasted according to an "English muffin" recipe may have a standard toast time of 25 seconds while a bagel , when toasted according to a "bagel" recipe has a standard toast time of 17 seconds. The same equation may be used to adjust the toast time of either a bagel or an English muffin during a recovery or a power save transition state with the input of the respective standard toast time. Similarly, a darkly toasted English muffin may have a Standard toast time of 35 seconds, and this standard toast time is used to adjust the toast time (and subsequently conveyor speed) during the recovery or power save transition states to achieve the same darkly toasted result. The standard toast time reflects the bread product being toasted and the level of toasting. The above equations for a transition state model in combination with the Standard toast time provide a conveyor speed adjustment during a period of heat source operation transition that results in a consistent toasting of bread products during the transition.

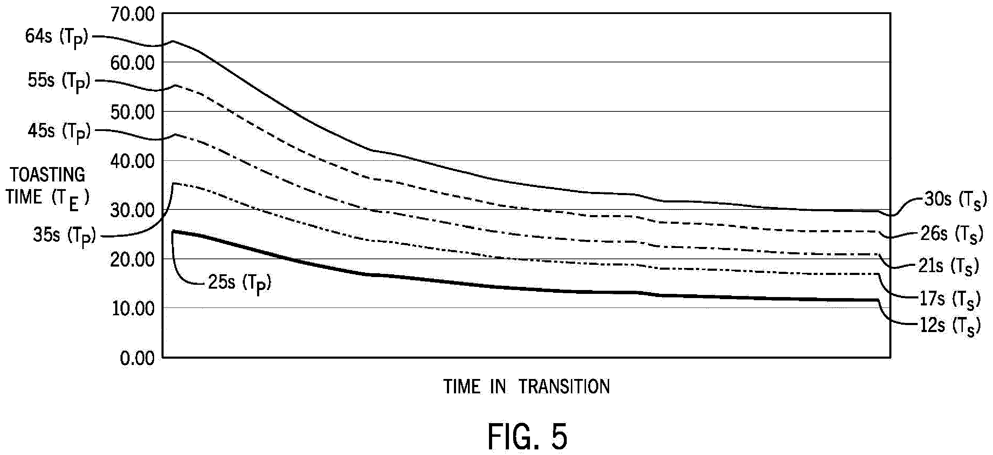

Figure 5 is a graph that depicts various recovery toasting time curves all produced from the equation above and differing only in the standard toast time ($T_S$) of the bread product to achieve a specified toasting level. The end of the graph opposite the $T_S$ values exemplarily presents the current toast time for a new bread product introduced to the toaster while the toaster is in a steady state power save mode ($T_P$).

As noted above, the adjustment to the current conveyor speed to achieve the specified current toast time (Tt) is also dependent upon an elapsed time during the current transition state. With reference to Figs. 3 and 4, the transition state (either recovery or power save) generally exists between the steady state standard operation mode and the steady state power save mode. Referring to Fig. 5, it will be recognized that at the start of the recovery transition state, the current toast time (Tt) is equivalent to the toast time ($T_p$) for a new bread product in the steady state power save mode. As the recovery transition state progresses at the increased heat source output, the current toast time $T_t$ decreases until the standard toast time $T_S$ is reached.

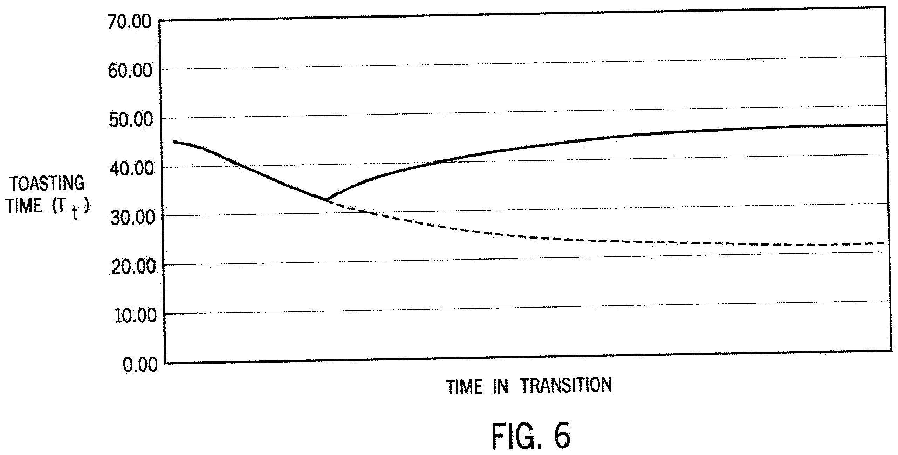

Figure 6 presents a further graph of an example wherein a first transition state (e.g. recovery transition state) begins, but then prior to reaching the steady state standard operation mode, the operation is reversed, thereby entering a second transition state (e.g. power save transition state). This is also depicted in Fig. 4 with the lines between the power save transition state 54 and the recovery transition state 58. This, for example, may occur in an instance when the toaster has come out of the power save state, but only does so as long as the toaster detects new bread product coming in. The toaster is used for toasting a bread product, and so long as more bread products are received, the toaster continues to operate with the standard operation mode settings, and a resulting increasing conveyor speed (e.g. decreasing toasting time) However, subsequently, and prior to reaching the standard operation steady state, no further bread products are received into the toaster and the toaster returns to the power save state. In an example, the controller may operate to maintain the toaster in the steady state power save mode until an operator interacts with the touch-sensitive graphical display. In this manner, if no settings for the toaster need to be changed the toaster may be used to toast the bread product with the conveyor at the speeds as determined above while remaining in the power save mode.

A further example is the intermediate transition from the power save transition state to the recovery transition state. This is the opposite transition between states than that as depicted in Fig. 6. The toaster may operate in the power save transition state, but then is re-directed to the recovery transition state for additional toasting and operation towards the standard operation mode. Such an example of operation may occur when a toaster operates to reduce the output of one or more heat sources, but before the steady state power save mode is reached, an operator interacts with the toaster (for example by interacting with the touch-sensitive display or by additional bread product detected on the conveyor). The toaster then operates to the recovery transition state towards the steady state standard operation mode.

Changes in toaster heat source output may occur during other operations besides power saving operation. In a further example, a recipe change for toasting a bread product may result in a change in toaster heat source output. In one example, an operator may select a change from a recipe toasting a single-sided bread product (e.g. a bagel or English muffin) to toasting a two-sided bread product (e.g. sourdough bread slice). While the single-sided operation presented above exemplarily output 3000 Watts from the top heat source and 1400 Watts from the bottom heat source, an example of dual-sided toasting may balance the output at 2000Watts from each heat source, while similarly slowing the toasting time (bread product toasting qualities being held the same) to achieve the same previous level of toasting on both sides of the bread product. In such a case the new (longer) standard operation toasting time is used in the transition model to adjust the conveyor speed during this transition state.

As previously noted, the coefficients for the transition model provided above can be empirically derived through calibration and testing of the toaster. In the calibration and testing, a benchmark bread product (or set of bread products) can be sequentially toasted at predefined time intervals during the transition state and the time interval to achieve the consistent toasting level recorded. These time intervals may be plotted and a model (e.g. a second order or third order polynomial fit to this plot. As noted above, in examples, such empirical data collection and modeling may occur for one or more different magnitude changes in output power. The use of a set of benchmark bread products may help to confirm the scalability of the model across different standard operation toast times.

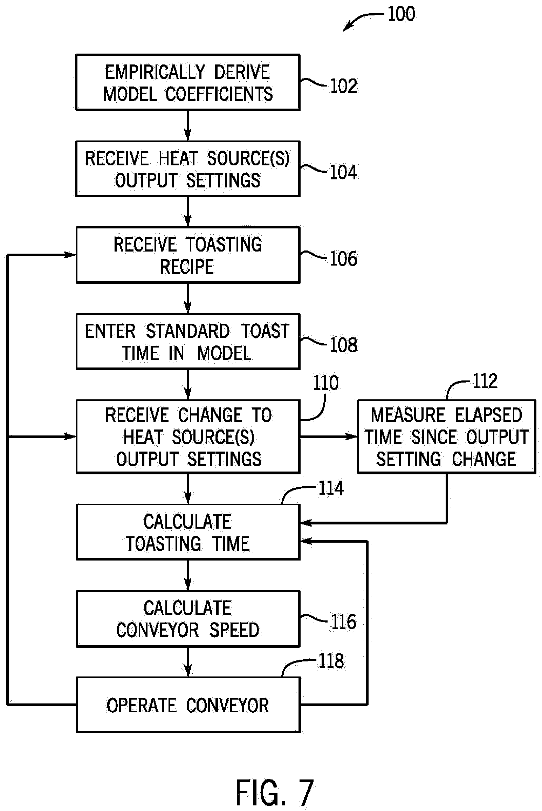

Figure 7 is a flow chart of an example of a method 100 of operation of a toaster in accordance with the disclosure above. At 102 the coefficients for the increased output transition state model and the decreased output transition state model are empirically derived. This may be conducted in the field as part of a calibration routine, or may be performed during product development and pre-programmed into the controller 34, or may be provided as part of a software update or installation to the controller 34. As previously noted, there is an increased output transition state model and a decreased output transition state model. Those models may have the same or different coefficient absolute values.

During operation of the toaster, the toaster receives output settings for the one or more heat sources at 104. This may represent the initial settings for the heat source(s) upon turning on the toaster for a day of operation. The toaster operates the heat source(s) according to these settings. Next, the toaster receives a toasting recipe at 106. The toasting recipe may be selected by an operator from a plurality of recipes stored at the toaster and accessible by the controller 34. The toasting recipe may identify a bread product and may include a toasting level of that bread product. The toasting recipe exemplarily includes heat source settings and the standard operation toast time and/or corresponding conveyor speed to achieve the specified level of toasting of the specified bread product. In another example, the recipe may be for a time of day or for a specific menu, with the toaster settings of the recipe being selected for the expected toasting requirements of that time of day or menu.

At 108, the standard toast time from the toasting recipe is entered into the transition state model. As previously noted, the transition state model is scalable relative to the standard toast time of the bread product recipe. This sets the appropriate scaling of the transition state model.

At 110, a change to the output of the one or more heat sources is received. This may exemplarily be a change to the heat source output from the received toasting recipe (if the recipe included a change to heat source output) or may be a signal to enter or recover from a power save operation. The heat source(s) are operated to the newly received output settings. At 112 a timer is started to measure the elapsed time since the heat source output setting changed.

At 114, the current transition state toasting time is calculated. The increased output transition state model or the decreased output transition state model is selected and the current transition state toasting time is calculated with the model and the inputs of the standard operation toasting time and the elapsed time since the output setting change. The current transition state toasting time is directly related to the conveyor speed and the dimensions of the toaster, and specifically the toasting zone 24 of the toaster. The conveyor speed is calculated as the speed of the conveyor required to advance a point on the conveyor through the entirety of the toasting zone 24 in the current transition state toasting time. The controller 34, having calculated the conveyor speed provides, at 118, the appropriate control signals to the conveyor motor 46 to advance the conveyor at the calculated conveyor speed.

During the transition state, the controller 34 operates to update the calculated current transition state toasting time and associated conveyor speed as the elapsed time since the output setting change at 112 advances. In examples, a predetermined time for example, but not limited to 10, 12, 15, 20, or 30 minutes may define the transition state. After the transition state the conveyor speed is operated according to an assumed steady state of the toaster. The toaster may operate to enter a new transition state which may be due to the receipt of a new toasting recipe at 106, for example, if an operator changes the bread product or toasting level to be toasted in a lane of the toaster. This may also be the entry of a power saving mode, for example, if the toaster has not received any interaction with the touch-sensitive display within a predefined time period (e.g. 30 minutes), at which time, the power save mode changes to the heat source(s) output settings are received at 110.

Citations to a number of references are made herein. In the event that there is an inconsistency between a definition of a term in the specification as compared to a definition of the term in a cited reference, the term should be interpreted based on the definition in the specification.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and method steps described herein may be used alone or in combination with other systems and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A radiant toaster (10) for toasting a bread product in a toasting process, the toaster comprising:

a conveyor (12);
a heat source (20) arranged relative to the conveyor;
a controller (34)
**characterized in that** the controller is configured to receive a transition state model and a toasting recipe that comprises a standard operation toasting time, wherein upon receipt of an instruction to change a heat output of the heat source to a new output, the controller operates the heat source to the new output and measures an elapsed time since the change to the new output, the controller further calculates a current transition state toast time by applying the standard operation toasting time and the elapsed time to the transition state model, and the controller is configured to operate the conveyor to a conveyor speed associated to the current transition state toast time.

2. The toaster of claim 1, wherein the heat source (20) is a first heat source arranged above the conveyor and further comprising a second heat source arranged below a top surface of the conveyor.

3. The toaster of claim 1 or 2, wherein the heat source includes one or more of the following: a gas IR emitter heat source and an electric IR emitter heat source.

4. The toaster of any of claims 1-3, wherein the transition state model is a first transition state model and further comprising a second transition state model, wherein the first transition state model is an increased output transition state model and the second transition state model is a decreased output transition state model, and the controller further selects between the first transition state model and the second transition state model based upon the new output of the heat source.

5. The toaster of any of claims 1-4, wherein coefficients of the transition state model are empirically derived.

6. The toaster of any of claims 1-5, wherein the transition state model is a polynomial having the form of:

$$T_t = A(T_S)x^3 + B(T_S)x^2 + C(T_S)x + D(T_S)$$

wherein Tt= Current toast time for a new bread product;
x = an elapsed time in the transition state;
$T_S$ = a standard toast time for the bread and toast level; and

wherein absolute values of the coefficients of the polynomial are within the following ranges:

$$0.00004 \leq A \leq 0.0002;$$

$$0.0005 \leq B \leq 0.020295;$$

$$0.03141 \leq C \leq 0.34577;$$

and

$$0.85 \leq D \leq 2.39$$

7. The toaster of any of claims 1-6, wherein the heat source is a first heat source arranged above the conveyor and further comprising a second heat source arranged below a top surface of the conveyor and values of the coefficients of the polynomial are dependent upon an energy output distribution between the first heat source and the second heat source.

8. The toaster of any of claims 1-7, further comprising a touch-sensitive graphical display (36) communicatively connected to the controller, the touch-sensitive graphical display configured to be operated by the controller to present a graphical user interface (GUI) and configured to receive user inputs;

wherein the controller is configured to monitor an elapsed time since a user input is received at the touch-sensitive graphical display, and configured to reduce an output of the heat source if the elapsed time exceeds a predetermined threshold; or

wherein the controller is further configured to return the heat source to a previous output upon subsequent receipt of a user input at the touch-sensitive graphical display.

9. The toaster of any of claims 1-8, wherein the conveyor is a first conveyor and further comprising:

a second conveyor adjacent to and co-planar with the first conveyor;

a third heat source arranged above the second conveyor; and

a fourth heat source arranged below a top surface of the second conveyor

wherein the controller is configured to operate the first conveyor and heat source according to a first toasting recipe and is configured to operate the second conveyor, third heat source, and the fourth heat source according to a second toasting recipe.

10. A method of toaster conveyor speed control of a toaster of any of claims 1-9, the method comprising:

receiving the transition state model at the controller of the toaster;

operating the heat source to a first heat output;

receiving a standard toast time for a bread product to be toasted;

operating the conveyor at a conveyor speed based upon the standard toast time;

operating the at least one heat source to change to a second heat output;

measuring an elapsed time since the change to the second heat output;

calculating a current toast time by applying the standard toast time and the elapsed time to the transition state model;

operating a conveyor at a current conveyor speed calculated based upon the current toast time; and optionally:

monitoring an elapsed time since a user input is received at a graphical display of the toaster;

when the elapsed time exceeds a predetermined threshold, then operating the at least one heat source to change to the second heat output, wherein the second heat output is a reduction in total output from the first heat output.

11. The method of claim 10, wherein the current toast time is calculated independently from a temperature internal to the toaster.

12. The method of claim 10 or 11, wherein the transition state model comprises an increased output transition state model having the form of: $T_t = A(T_S)x^3 + B(T_S)x^2 + C(T_S)x + D(T_S)$;

and a decreased output transition state model having the form of: $T_t = E(T_S)x^3 + F(T_S)x^2 + G(T_S)x + H(T_S)$.

13. The method of claim 12, wherein coefficients of the transition state models are within the following ranges:

$$-0.00012 \leq A \leq -0.0002;$$

$$0.0005 \leq B \leq 0.020295;$$

$$-0.03141 \leq C \leq -0.34577;$$

$$1.75 \leq D \leq 2.39;$$

$$0.00004 \leq E \leq 0.0002;$$

$$-0.00286 \leq F \leq -0.0145;$$

$$0.103352 \leq G \leq 0.307928;$$

and

$$0.85 \leq H \leq 1.05.$$

14. The method of claim 12 or 13, wherein the heat source is a first heat source arranged above the conveyor and further comprising a second heat source arranged below a top surface of the conveyor and values of the coefficients of the transition state models are dependent upon an energy output distribution between the first heat source and the second heat source.

15. The method of any of claims 12-14, further comprising performing a calibration routine to empirically derive coefficients of the third-order polynomial of the transition state model.

**Patentansprüche**

1. Strahlungstoaster (10) zum Toasten eines Brotprodukts in einem Toastvorgang, umfassend:

einen Förderer (12);
eine relativ zum Förderer angeordnete Wärmequelle (20);
eine Steuerung (34)
**dadurch gekennzeichnet, dass** die Steuerung so konfiguriert ist, dass sie ein Übergangszustandsmodell und ein Röstrezept empfängt, das eine Standardröstzeit für den Betrieb umfasst, wobei die Steuerung beim Empfang einer Anweisung zum Ändern einer Wärmeleistung der Wärmequelle auf eine neue Leistung die Wärmequelle mit der neuen Leistung betreibt und die seit der Änderung auf die neue Leistung vergangene Zeit misst, die Steuerung ferner eine aktuelle Übergangszustands-Toastzeit berechnet, indem sie die Standardbetriebs-Toastzeit und die vergangene Zeit auf das Übergangszustandsmodell anwendet, und die Steuerung so konfiguriert ist, dass sie den Förderer mit einer Förderergeschwindigkeit betreibt, die der aktuellen Übergangszustands-Toastzeit entspricht.

2. Toaster nach Anspruch 1, wobei die Wärmequelle (20) eine erste Wärmequelle ist, die über dem Förderer angeordnet ist, und ferner eine zweite Wärmequelle umfasst, die unter einer oberen Oberfläche des Förderers angeordnet ist.

3. Toaster nach Anspruch 1 oder 2, wobei die Wärmequelle eine oder mehrere der folgenden umfasst: eine Gas-IR-Emitter-Wärmequelle und eine elektrische IR-Emitter-Wärmequelle.

4. Toaster nach einem der Ansprüche 1 bis 3, wobei das Übergangszustandsmodell ein erstes Übergangszustandsmodell ist und ferner ein zweites Übergangszustandsmodell umfasst, wobei das erste Übergangszustandsmodell ein Übergangszustandsmodell mit erhöhter Leistung und das zweite Übergangszustandsmodell ein Übergangszustandsmodell mit verringerter Leistung ist, und wobei die Steuerung ferner basierend auf der neuen Leistung der Wärmequelle zwischen dem ersten Übergangszustandsmodell und dem zweiten Übergangszustandsmodell wählt.

5. Toaster nach einem der Ansprüche 1 bis 4, wobei die Koeffizienten des Übergangszustandsmodells empirisch abgeleitet werden.

6. Toaster nach einem der Ansprüche 1 bis 5, wobei das Übergangszustandsmodell ein Polynom der folgenden Form ist:

$$T_t = A(T_S) x^3 + B(T_S) x^2 + C(T_S) x + D(T_S)$$

wobei $T_t$ = aktuelle Toastzeit für ein neues Brotprodukt; x = verstrichene Zeit im Übergangszustand;
$T_S$ = Standardtoastzeit für das Brot und den Toastgrad; und
wobei die Absolutwerte der Koeffizienten des Polynoms in den folgenden Bereichen liegen:

$$0,00004 \leq A \leq 0,0002;$$

$$0,0005 \leq B \leq 0,020295;$$

$$0,03141 \leq C \leq 0,34577;$$

und

$$0,85 \leq D \leq 2,39$$

**7.** Toaster nach einem der Ansprüche 1 bis 6, wobei die Wärmequelle eine erste Wärmequelle ist, die über dem Förderer angeordnet ist, und ferner eine zweite Wärmequelle umfasst, die unter einer Oberseite des Förderers angeordnet ist, und wobei die Werte der Koeffizienten des Polynoms von einer Energieabgabeverteilung zwischen der ersten Wärmequelle und der zweiten Wärmequelle abhängen.

**8.** Toaster nach einem der Ansprüche 1 bis 7, ferner umfassend eine berührungsempfindliche grafische Anzeige (36), die kommunikativ mit der Steuerung verbunden ist, wobei die berührungsempfindliche grafische Anzeige so konfiguriert ist, dass sie von der Steuerung bedient wird, um eine grafische Benutzeroberfläche (GUI) darzustellen, und so konfiguriert ist, dass sie Benutzereingaben empfängt;

wobei die Steuerung dazu konfiguriert ist, die seit dem Empfang einer Benutzereingabe auf der berührungsempfindlichen grafischen Anzeige verstrichene Zeit zu überwachen und die Leistung der Wärmequelle zu reduzieren, wenn die verstrichene Zeit einen vorgegebenen Schwellenwert überschreitet; oder
wobei die Steuerung ferner dazu konfiguriert ist, die Wärmequelle nach dem Empfang einer Benutzereingabe auf der berührungsempfindlichen grafischen Anzeige auf die vorherige Leistung zurückzusetzen.

**9.** Toaster nach einem der Ansprüche 1 bis 8, wobei der Förderer ein erster Förderer ist und ferner Folgendes umfasst:

einen zweiten Förderer, der an den ersten Förderer angrenzt und mit diesem koplanar ist;
eine dritte Wärmequelle, die über dem zweiten Förderer angeordnet ist; und
eine vierte Wärmequelle, die unter der Oberseite des zweiten Förderers angeordnet ist,
wobei die Steuerung dazu konfiguriert ist, den ersten Förderer und die erste Wärmequelle gemäß einem ersten Röstrezept zu betreiben, und dazu konfiguriert ist, den zweiten Förderer, die dritte Wärmequelle und die vierte Wärmequelle gemäß einem zweiten Röstrezept zu betreiben.

**10.** Verfahren zur Steuerung der Förderergeschwindigkeit eines Toasters nach einem der Ansprüche 1 bis 9, umfassend:

Empfangen des Übergangszustandsmodells an der Steuerung des Toasters;
Betreiben der Wärmequelle auf eine erste Wärmeleistung;
Empfangen einer Standardtoastzeit für ein zu toastendes Brotprodukt;
Betreiben des Förderers mit einer Förderergeschwindigkeit basierend auf der Standardtoastzeit;
Betreiben der mindestens einen Wärmequelle zum Umschalten auf eine zweite Wärmeleistung;
Messen der seit dem Wechsel zur zweiten Wärmeleistung verstrichenen Zeit;
Berechnen der aktuellen Toastzeit durch Anwendung der Standard-Toastzeit und der verstrichenen Zeit auf das Übergangszustandsmodell;
Betreiben eines Förderers mit einer aktuellen Förderergeschwindigkeit, die auf Grundlage der aktuellen Toastzeit berechnet wird; und optional:

Überwachen der verstrichenen Zeit seit dem Empfang einer Benutzereingabe auf einer grafischen Anzeige des Toasters;
wenn die verstrichene Zeit einen vorgegebenen Schwellenwert überschreitet, dann Betreiben der mindestens einen Wärmequelle, um auf die zweite Wärmeleistung umzuschalten, wobei die zweite Wärmeleistung eine Reduzierung der Gesamtleistung gegenüber der ersten Wärmeleistung darstellt.

**11.** Verfahren nach Anspruch 10, wobei die aktuelle Toastzeit unabhängig von der Temperatur im Inneren des Toasters berechnet wird.

**12.** Verfahren nach Anspruch 10 oder 11, wobei das Übergangszustandsmodell ein Übergangszustandsmodell mit erhöhter Ausgangsleistung der Form $T_t = A(T_S)x^3 + B(T_S)x^2 + C(T_S)x + D(T_S)$;
und ein Übergangszustandsmodell mit verringerter Ausgangsleistung der Form $T_t = E(T_S)x^3 + F(T_S)x^2 + G(T_S)x + H(T_S)$ umfasst.

## EP 4 344 592 B1

**13.** Verfahren nach Anspruch 12, wobei die Koeffizienten der Übergangszustandsmodelle in den folgenden Bereichen liegen:

$$-0,00012 \leq A \leq -0,0002;$$

$$0,0005 \leq B \leq 0,020295;$$

$$-0,03141 \leq C \leq -0,34577;$$

$$1,75 \leq D \leq 2,39;$$

$$0,00004 \leq E \leq 0,0002;$$

$$-0,00286 \leq F \leq -0,0145;$$

$$0,103352 \leq G \leq 0,307928;$$

und

$$0,85 \leq H \leq 1,05.$$

**14.** Verfahren nach Anspruch 12 oder 13, wobei die Wärmequelle eine erste Wärmequelle ist, die über dem Förderer angeordnet ist, und ferner eine zweite Wärmequelle umfasst, die unter einer Oberseite des Förderers angeordnet ist, und wobei die Werte der Koeffizienten der Übergangszustandsmodelle von einer Energieabgabeverteilung zwischen der ersten Wärmequelle und der zweiten Wärmequelle abhängen.

**15.** Verfahren nach einem der Ansprüche 12 bis 14, ferner umfassend das Durchführen einer Kalibrierungsroutine zum empirischen Herleiten von Koeffizienten des Polynoms dritter Ordnung des Übergangszustandsmodells.

**Revendications**

**1.** Grille-pain radiant (10) pour griller un produit de pain dans un processus de grillage, le grille-pain comprenant :

un transporteur (12) ;
une source de chaleur (20) agencée par rapport au transporteur ;
un dispositif de commande (34) **caractérisé en ce que** le dispositif de commande est configuré pour recevoir un modèle d'état de transition et une recette de grillage qui comprend un temps de grillage de fonctionnement standard, dans lequel, lors de la réception d'une instruction pour faire passer une sortie de chaleur de la source de chaleur à une nouvelle sortie, le dispositif de commande fait fonctionner la source de chaleur à la nouvelle sortie et mesure un temps écoulé depuis le passage à la nouvelle sortie, le dispositif de commande calcule en outre un temps de grillage d'état de transition actuel en appliquant le temps de grillage de fonctionnement standard et le temps écoulé au modèle d'état de transition, et le dispositif de commande est configuré pour faire fonctionner le transporteur à une vitesse de transporteur associée au temps de grillage d'état de transition actuel.

**2.** Grille-pain selon la revendication 1, dans lequel la source de chaleur (20) est une première source de chaleur agencée au-dessus du transporteur et comprenant en outre une deuxième source de chaleur agencée sous une surface supérieure du transporteur.

**3.** Grille-pain selon la revendication 1 ou 2, dans lequel la source de chaleur comporte un ou plusieurs des éléments suivants : une source de chaleur à émetteur IR à gaz et une source de chaleur à émetteur IR électrique.

**4.** Grille-pain selon l'une quelconque des revendications 1 à 3, dans lequel le modèle d'état de transition est un premier modèle d'état de transition et comprenant en outre un second modèle d'état de transition, dans lequel le premier modèle d'état de transition est un modèle d'état de transition de sortie augmentée et le second modèle d'état de transition est un modèle d'état de transition de sortie diminuée, et le dispositif de commande sélectionne en outre entre le premier modèle d'état de transition et le second modèle d'état de transition sur la base de la nouvelle sortie de la source de chaleur.

**5.** Grille-pain selon l'une quelconque des revendications 1 à 4, dans lequel des coefficients du modèle d'état de transition sont dérivés de manière empirique.

**6.** Grille-pain selon l'une quelconque des revendications 1 à 5, dans lequel le modèle d'état de transition est un polynôme ayant la forme suivante :

$$T_t = A(T_s) x^3 + B(T_s) x^2 + C(T_s) x + D(T_s)$$

dans lequel $T_t$ = Temps de grillage actuel pour un nouveau produit de pain ;
x = un temps écoulé dans l'état de transition ;
$T_s$ = un temps de grillage standard pour le pain et le niveau de grillage ; et
dans lequel des valeurs absolues des coefficients du polynôme sont comprises dans les plages suivantes :

$$0,00004 \leq A \leq 0,0002 ;$$

$$0,0005 \leq B \leq 0,020295 ;$$

$$0,03141 \leq C \leq 0,34577 ;$$

et

$$0,85 \leq D \leq 2,39$$

**7.** Grille-pain selon l'une quelconque des revendications 1 à 6, dans lequel la source de chaleur est une première source de chaleur agencée au-dessus du transporteur et comprenant en outre une deuxième source de chaleur agencée sous une surface supérieure du transporteur et des valeurs des coefficients du polynôme dépendent d'une distribution de sortie d'énergie entre la première source de chaleur et la deuxième source de chaleur.

**8.** Grille-pain selon l'une quelconque des revendications 1 à 7, comprenant en outre un affichage graphique tactile (36) connecté de manière communicative au dispositif de commande, l'affichage graphique tactile étant configuré pour être actionné par le dispositif de commande afin de présenter une interface utilisateur graphique (GUI) et configuré pour recevoir des entrées utilisateur ;

dans lequel le dispositif de commande est configuré pour surveiller le temps écoulé depuis qu'une entrée utilisateur est reçue sur l'affichage graphique tactile, et configuré pour réduire une sortie de la source de chaleur si le temps écoulé dépasse un seuil prédéterminé ; ou
dans lequel le dispositif de commande est en outre configuré pour ramener la source de chaleur à une sortie précédente lors de la réception ultérieure d'une entrée utilisateur au niveau de l'affichage graphique tactile.

**9.** Grille-pain selon l'une quelconque des revendications 1 à 8, dans lequel le transporteur est un premier transporteur et comprenant en outre :

un second transporteur adjacent et coplanaire avec le premier transporteur ;
une troisième source de chaleur agencée au-dessus du second transporteur ; et
une quatrième source de chaleur agencée sous une surface supérieure du second transporteur
dans lequel le dispositif de commande est configuré pour faire fonctionner le premier transporteur et la source de chaleur selon une première recette de grillage et est configuré pour faire fonctionner le second transporteur, la troisième source de chaleur, et la quatrième source de chaleur selon une seconde recette de grillage.

**10.** Procédé de commande de vitesse de transporteur de grille-pain selon l'une quelconque des revendications 1 à 9, le procédé comprenant :

la réception du modèle d'état de transition au niveau du dispositif de commande du grille-pain ;

le fonctionnement de la source de chaleur à une première sortie de chaleur ;

la réception d'un temps de grillage standard pour un produit de pain à griller ;

le fonctionnement du transporteur à une vitesse de transporteur sur la base du temps de grillage standard ;

le fonctionnement de l'au moins une source de chaleur pour passer à une seconde sortie de chaleur ;

la mesure d'un temps écoulé depuis le passage à la seconde sortie de chaleur ;

le calcul d'un temps de grillage actuel en appliquant le temps de grillage standard et le temps écoulé au modèle d'état de transition ;

le fonctionnement d'un transporteur à une vitesse de transporteur actuelle calculée sur la base du temps de grillage actuel ; et éventuellement :

la surveillance d'un temps écoulé depuis la réception d'une entrée utilisateur au niveau d'un affichage graphique du grille-pain ;

lorsque le temps écoulé dépasse un seuil prédéterminé, alors le fonctionnement de l'au moins une source de chaleur pour passer à la seconde sortie de chaleur, dans lequel la seconde sortie de chaleur est une réduction de la sortie totale par rapport à la première sortie de chaleur.

11. Procédé selon la revendication 10, dans lequel le temps de grillage actuel est calculé indépendamment d'une température interne au grille-pain.

12. Procédé selon la revendication 10 ou 11, dans lequel le modèle d'état de transition comprend un modèle d'état de transition de sortie augmentée ayant la forme suivante : $T_t = A(T_s)x^3 + B(T_s)x^2 + C(T_s)x + D(\tau_s)$,
et un modèle d'état de transition de sortie diminuée ayant la forme suivante : $T_t = E(T_s)x^3 + F(T_s)x^2 + G(T_s)x + H(T_s)$.

13. Procédé selon la revendication 12, dans lequel des coefficients des modèles d'état de transition se situent dans les plages suivantes :

$$-0,00012 \leq A \leq -0,0002 ;$$

$$0,0005 \leq B \leq 0,020295 ;$$

$$-0,03141 \leq C \leq -0,34577 ;$$

$$1,75 \leq D \leq 2,39 ;$$

$$0,00004 \leq E \leq 0,0002 ;$$

$$-0,00286 \leq F \leq -0,0145 ;$$

$$0,103352 \leq G \leq 0,307928 ;$$

et

$$0,85 \leq H \leq 1,05.$$

14. Procédé selon la revendication 12 ou 13, dans lequel la source de chaleur est une première source de chaleur agencée au-dessus du transporteur et comprenant en outre une deuxième source de chaleur agencée sous une surface supérieure du transporteur et des valeurs des coefficients des modèles d'état de transition dépendent d'une distribution de sortie d'énergie entre la première source de chaleur et la deuxième source de chaleur.

15. Procédé selon l'une quelconque des revendications 12 à 14, comprenant en outre l'exécution d'une routine d'étalonnage pour dériver empiriquement des coefficients du polynôme du troisième ordre du modèle d'état de transition.

FIG. 1

FIG. 2

FIG. 3

FIG. 4

EP 4 344 592 B1

FIG. 5

FIG. 6

EP 4 344 592 B1

100

EMPIRICALLY DERIVE
MODEL COEFFICIENTS — 102

RECEIVE HEAT SOURCE(S)
OUTPUT SETTINGS — 104

RECEIVE TOASTING
RECIPE — 106

ENTER STANDARD TOAST
TIME IN MODEL — 108

110
RECEIVE CHANGE TO
HEAT SOURCE(S)
OUTPUT SETTINGS

112
MEASURE ELAPSED
TIME SINCE OUTPUT
SETTING CHANGE

114
CALCULATE
TOASTING TIME

CALCULATE
CONVEYOR SPEED — 116

118
OPERATE CONVEYOR

FIG. 7

**EP 4 344 592 B1**

**REFERENCES CITED IN THE DESCRIPTION**

**Patent documents cited in the description**

- US 63377630
- US 10660466 B
- US 11284745 B
- US 2020288912
- US 20210059472
- US 20210085125
- US 20210127898
- US 20210298526
- US 749649
- US 2013306616 A
- US 5821503 A
- US 6198077 B
- US 6624396 B
- US 7541559 B
- US 10004358 B
- US 10758085 B